# EUROPÄISCHE PATENTSCHRIFT

(11) **EP 1 155 607 B1**
(45) Veröffentlichungstag und Bekanntmachung des Hinweises auf die Patenterteilung: **17.11.2004**
(21) Anmeldenummer: 01111026.9
(22) Anmeldetag: 08.05.2001
(51) Int. Cl.: A01D 41/14

(54) **Höhenfühler für einen Erntevorsatz**
Height feeler for harvester head
Palpeur de hauteur pour tête de récolte

(30) Priorität: 16.05.2000 US 571247
(43) Veröffentlichungstag der Anmeldung: 21.11.2001
(73) Patentinhaber: DEERE & COMPANY, Moline, Illinois 61265-8098 (US)
(72) Erfinder: Christensen, Timothy Franklin, Orion, IL 61273 (US); Becker, Klaus Ernst, East Moline, IL 61244 (US); Wessel, Paul Thomas, Greenwood, IN 46142 (US)
(74) Vertreter: Holst, Sönke, Dr.

(56) Entgegenhaltungen:
- EP-A- 0 331 893
- DD-A- 72 624
- DE-A- 1 955 243
- FR-A- 1 487 175
- FR-A- 2 242 923
- FR-A- 2 420 297
- GB-A- 1 124 111
- GB-A- 2 141 012

## Beschreibung

Die Erfindung betrifft einen Höhenfühler für einen Erntevorsatz mit einer quer zu einer Vorwärtsbewegungsrichtung des Erntevorsatzes angeordneten, drehbaren Welle, einem ersten, steifen Arm, der fest mit der Welle verbunden ist und sich bezüglich der Vorwärtsbewegungsrichtung von der Welle nach hinten und unten erstreckt, und einem zweiten steifen Arm, der im Abstand von der Welle mit dem ersten Arm schwenkbar gekoppelt ist und sich von der drehbaren Verbindung mit dem ersten Arm nach hinten und oben erstreckt.

Landwirtschaftliche Mähdrescher können mit Steuereinrichtungen für die Höhe des Erntevorsatzes ausgestattet sein, die es ermöglichen, die Position des Erntevorsatzes relativ zum Erdboden zu steuern. Bodenkontakt aufweisende Fühler können verwendet werden, um den Abstand von der Unterseite des Erntevorsatzes zum Erdboden zu messen. Diese Bodenkontakt aufweisenden Fühler umfassen im Allgemeinen einen sich nach unten erstreckenden Arm, der den Boden unterhalb des Erntevorsatzes berührt. Wenn der Arm durch ein Hindernis nach oben abgelenkt wird, bewegt er eine mechanische Verbindung oder ein Potentiometer, das der selbsttätigen Höhensteuerung des Erntevorsatzes signalisiert, dass der Erntevorsatz anzuheben ist.

Bei einer Fühlerkonfiguration ist ein J-förmiger, steifer Arm mit einer quer angeordneten, drehbaren Welle gekoppelt. Wenn der Arm ausgelenkt wird, dreht sich die Welle und verschiebt ein Potentiometer oder eine mechanische Verbindung. Wegen der J-Form und des steifen Aufbaus des Arms kann es schwierig sein, diese Arme im Boden des Erntevorsatzes unterzubringen. Außerdem haben diese J-förmigen Arme einen relativ kleinen Radius, so dass es schwierig sein kann, mit dem Mähdrescher rückwärts zu fahren, ohne den Fühler zu beschädigen.

Bei einer anderen Fühlerkonfiguration bilden gebogene Federstahlbänder oder - bügel die Arme. Die Bänder können abgeflacht sein, um in eine Aussparung unter dem Boden des Erntevorsatzes zu passen. Außerdem bilden die Bänder einen großen Radius, der eine Rückwärtsbewegung des Mähdreschers erleichtert. Fühler mit derartigen Bändern können aber leicht bei scharfen Kehren beschädigt werden, wenn sie in einer Furche laufen.

In der GB 1 124 111 A ist ein Höhenfühler für einen Erntevorsatz beschrieben, der sich eine quer zur Vorwärtsrichtung erstreckende Welle aufweist, an der Halterungen befestigt sind, die wiederum Finger halten. Jeder Finger besteht aus einem nach hinten und unten verlaufenden, sich nach hinten verjüngenden Kanalelement und einem kurzen gebogenen Stab, der schwenkbar am Kanalelement angelenkt ist und sich von dort nach hinten und oben erstreckt und verschiebbar in einem Schlitz in einem Querträger gelagert ist. Der gebogene Teil des Stabs berührt den Boden.

Die FR 2 420 297 A und GB 2 141 012 A zeigen Höhenfühler mit im Wesentlichen demselben Aufbau, wobei jedoch der in Fahrtrichtung vordere Teil des Höhenfühlers auf dem Boden aufliegt.

Bei den Höhenfühlern gemäß GB 1 124 111 A, FR 2 420 297 A und GB 2 141 012 A wird der in Fahrtrichtung hintere Teil des Höhenfühlers durch die Schwerkraft auf den Erdboden gedrückt. Beim Rückwärtsfahren besteht die Gefahr, dass der Höhenfühler an Bodenwellen oder dgl. hängen bleibt und verbiegt.

Die der Erfindung zugrunde liegende Aufgabe wird darin gesehen, einen Bodenkontakt aufweisenden Höhenfühler bereitzustellen, der leicht in eine Ausnehmung unter dem Boden des Erntevorsatzes eingebracht werden kann, der bei scharfen Kehren nicht leicht beschädigt wird und der auch bei Rückwärtsbewegungen nicht leicht beschädigt wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt einen Höhenfühler mit einer sich quer zur Vorwärtsbewegungsrichtung des Erntevorsatzes erstreckenden Welle, einem ersten steifen Arm und einem zweiten steifen Arm vor. Die drehbare Welle ist am Rahmen des Erntevorsatzes drehbar befestigt. Der erste steife Arm hat ein erstes Ende, das fest mit der drehbaren Welle verbunden ist. Der erste Arm erstreckt sich vorzugsweise in einer Kurve von der drehbaren Welle nach hinten und unten. Der zweite steife Arm ist mit dem zweiten Ende des ersten festen Arms schwenkbar gekoppelt und erstreckt sich von dort nach hinten und oben. Dabei können der erste und der zweite Arm einen relativ großen Radius definieren. Eine Feder sorgt für guten Bodenkontakt des zweiten Arms, in dem sie ihn relativ zum ersten Arm nach oben drückt.

Es werden somit Arme aus in sich steifem Material verwendet, die stabiler als die bekannten Federstahlbügel sind. Der schwenkbar am ersten Arm angelenkte zweite Arm und die Feder ermöglichen ein unproblematisches Rückwärtsfahren des Erntevorsatzes.

Vorzugsweise verbindet ein Verbindungselement, z.B. eine Kette, das hintere Ende des zweiten Arms mit dem Erntevorsatz.

Die Feder kann als Torsionsfeder ausgeführt und platzsparend an der Schwenklagerung des zweiten Arms am ersten Arm angebracht sein. Dabei kann der Schwenkbereich durch Anschläge begrenzt sein.

Der erste Arm kann geschützt in einer Ausnehmung an der Unterseite des Rahmens des Erntevorsatzes angeordnet werden. Diese Ausnehmung kann sich in einem sich von vorn nach hinten erstreckenden Träger an der Unterseite des Rahmens befinden.

In den Zeichnungen ist ein nachfolgend näher beschriebenes Ausführungsbeispiel der Erfindung dargestellt. Es zeigt:
- Fig. 1: einen seitlichen Querschnitt eines Erntevorsatzes mit einem Höhenfühler, der den Boden berührt und in seiner Betriebsposition und seiner Ruheposition gezeigt ist,

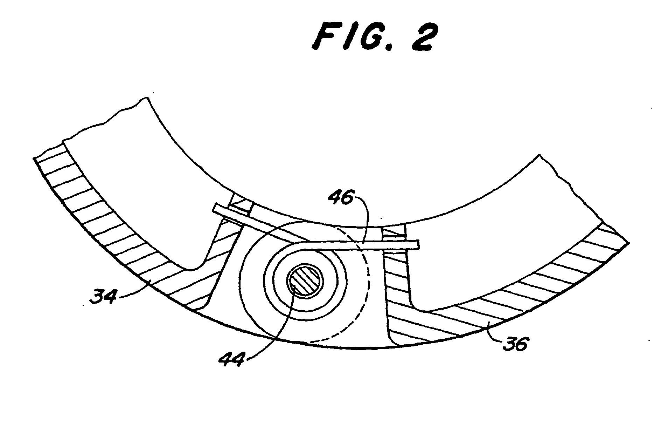

- Fig. 2: einen detaillierteren seitlichen Querschnitt des Fühlers, in dem die Feder zur Erzeugung einer Vorspannung erkennbar ist, und
- Fig. 3: einen detaillierteren seitlichen Querschnitt des Fühlers, in dem die Anschläge erkennbar sind.

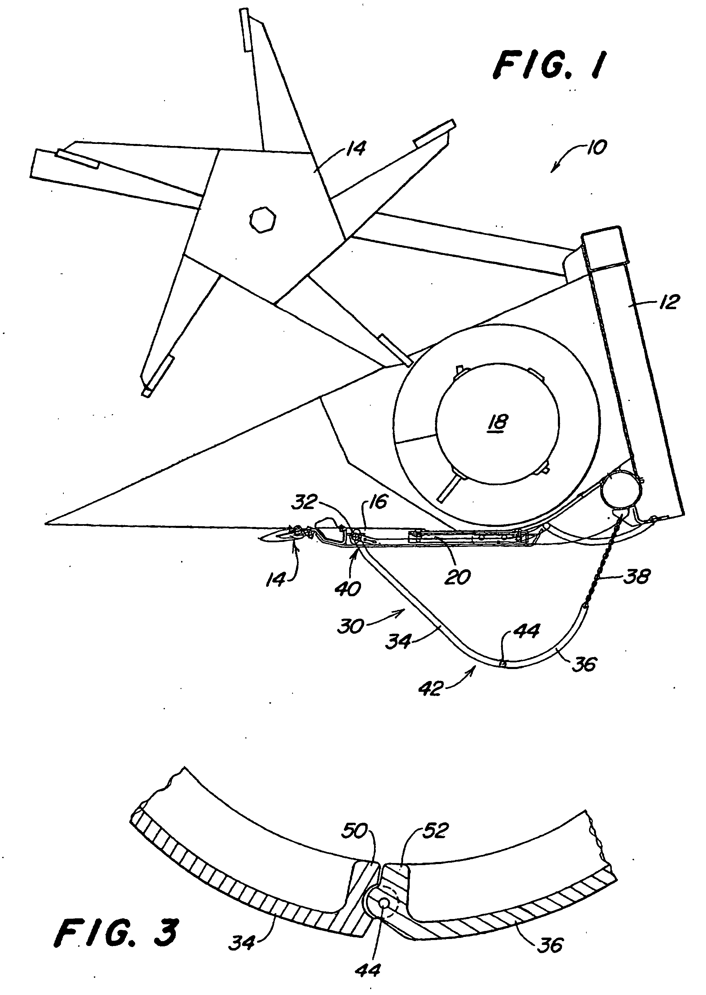

Der Zeichnungsbeschreibung ist voranzustellen, dass sich im Folgenden alle Richtungsangaben auf die Vorwärtsbewegungsrichtung des Erntevorsatzes 10 beziehen. Ein Erntevorsatz 10 in Form eines Schneidwerks ist in Figur 1 dargestellt. Obwohl die vorliegende Erfindung am Beispiel eines Schneidwerks dargestellt wird, kann sie auch an anderen Erntevorsätzen, wie Pflückern, Maisgebissen, Pick-Ups und Schneidwerken mit Gurtförderern Verwendung finden, die zumindest teilweise auch an Feldhäckslern benutzbar sind. Der Erntevorsatz 10 ist mit einem Rahmen 12, einer Erntegutzuführeinheit 14 in Form einer sich drehenden Haspel, die dem Rahmen 12 landwirtschaftliches Gut zuführt, und einem festen oder flexiblen Mähwerksbalken 14 ausgestattet, der das stehende Gut, das von der Haspel zum Rahmen gezogen wird, abschneidet. Bei anderen Erntevorsätzen werden andere Erntegutzuführeinheiten benutzt, beispielsweise verwenden Pflücker Einzugsketten und möglicherweise auch Schneckenförderer, um die Maisstängel zum Rahmen hin einzuziehen; Maisgebisse verwenden typischerweise serpentinenförmige Gurte, um das Erntegut einzuziehen; Pick-Ups verwenden eine Aufnahmetrommel und Lufthaspeln wurden auch benutzt, um Erntegut einzuziehen.

Nachdem das Erntegut durch den Mähwerksbalken 14 geschnitten wurde, gleitet es über den Boden 16 des Rahmens 12 zu einem quer angeordneten Schneckenförderer 18, der das geerntete Gut zusammenführt und es einem nicht gezeigten Schrägförderer zuführt. Der Boden 16 des Rahmens 12 ist auf sich von vorn nach hinten erstreckenden Trägern 20 abgestützt.

Ein Höhenfühler 30 ist am Rahmen 12 des Erntevorsatzes 10 angebracht. Der Höhenfühler 30 umfasst eine sich quer erstreckende, drehbare Welle 32, einen ersten steifen Arm 34, einen zweiten steifen Arm 36 und ein Verbindungselement 38. Die sich quer erstreckende Welle 32 ist unmittelbar hinter dem Mähwerksbalken 14 angeordnet. Die Welle 32 kann mit einem Potentiometer in Wirkverbindung stehen, um einer Steuereinrichtung für die Höhe des Erntevorsatzes 10 ein elektrisches Signal zuzuführen, das eine Information über den Abstand des Erntevorsatzes 10 zum Erdboden beinhaltet.

Der erste steife Arm 34 ist mit einem ersten Ende 40 und einem zweiten Ende 42 ausgestattet. Das erste Ende 40 ist fest an der drehbaren Welle 34 befestigt. Eine Bewegung des ersten steifen Arms 34 nach oben oder unten bedingt eine Drehung der sich quer erstreckenden drehbaren Welle 34. Von der drehbaren Welle 34 erstreckt sich der erste steife Arm 34 längs eines gekrümmten Wegs nach hinten und unten. Der zweite steife Arm 36 ist an einer Scharnierverbindung 44 mit dem zweiten Ende 42 des ersten steifen Arms 34 schwenkbar verbunden. Der zweite steife Arm 36 erstreckt sich in einer gekrümmten Weise von der Scharnierverbindung 44 nach oben und hinten. Wie in den Zeichnungen dargestellt, definieren der erste steife Arm 34 und der zweite steife Arm 36 einen großen Radius, der es dem Fühler ermöglicht, Hindernisse sogar auch rückwärts zu überqueren. Platten oder Kufen können an den steifen Armen 34, 36 befestigt werden, um ihr Gleitvermögen auf weichem Boden zu vergrößern.

Die Scharnierverbindung 44 ist mit einer Torsionsfeder 46 ausgestattet, die die beiden steifen Arme 34, 36 federnd in diesen gekrümmten Radius zwingt. Die Torsionsfeder 46 versucht, die beiden steifen Arme 34, 36 zusammenzuziehen, bis Anschläge 50, 52, die auf den Armen 34, 36 angeordnet sind, aneinander berühren. Obwohl eine Torsionsfeder für diese Anwendung gut geeignet ist, könnte auch eine flache oder schraubenförmige Feder benutzt werden. Die Torsionsfeder 46 muss hinreichend stark sein, um die beiden steifen Arme 34, 36 im ausgewählten Radius zu halten, aber weich genug, um es dem zweiten steifen Arm 36 zu ermöglichen, sich nach oben und unten zu bewegen, wenn er auf unebenem Boden bewegt wird. Auf diese Weise kann der zweite steife Arm 36 einen Teil der Stoßbelastungen aufnehmen, was ein weicheres Gleiten des Fühlers zur Folge hat.

Das Verbindungselement 38 kann entweder steif oder flexibel sein. In der dargestellten Ausführungsform ist das Verbindungselement 38 flexibel und weist eine Kette auf. Die Kette koppelt die Rückseite des zweiten steifen Arms 36 mit dem Rahmen 12. Ein Kabel, Seil oder anderes flexibles spannungsübertragendes Element kann anstelle der Kette verwendet werden.

Die Unterseiten der sich von vorn nach hinten erstreckenden Träger 20 sind mit einem mit einer Öffnung versehenen Bereich versehen, in dem der erste steife Arm 34 Aufnahme finden kann, wie in Figur 1 illustriert. Der erste steife Arm 34 würde in die sich von vorn nach hinten erstreckenden Träger gesteckt. Zusätzlich könnte der zweite steife Arm 36 derart größenmäßig bemessen sein, dass er den durchhängenden Teil der Kette aufnimmt, wenn der Fühler sich nach oben bewegt oder gelagert wird. Eine derartige Ablagemöglichkeit würde die Abnutzung und ein Abschleifen der Kette vermindern.

## Patentansprüche

1. Höhenfühler für einen Erntevorsatz (10), mit einer quer zu einer Vorwärtsbewegungsrichtung des Erntevorsatzes (10) angeordneten, drehbaren Welle (32), einem ersten, steifen Arm (34), der fest mit der Welle (32) verbunden ist und sich bezüglich der Vorwärtsbewegungsrichtung von der Welle (32) nach hinten und unten erstreckt, und einem zweiten steifen Arm (36), der im Abstand von der Welle (32) mit dem ersten Arm (34) schwenkbar gekoppelt ist und sich von der drehbaren Verbindung mit dem ersten Arm (34) nach hinten und oben erstreckt, **dadurch gekennzeichnet, dass** eine Feder den zweiten Arm (36) gegenüber dem ersten Arm (34) nach oben vorspannt.

2. Höhenfühler nach Anspruch 1, **dadurch gekennzeichnet, dass** ein Verbindungselement (38) an einer von der Schwenklagerung des zweiten Arms (36) am ersten Arm (34) beabstandeten Stelle mit dem zweiten Arm (36) verbunden und mit dem Erntevorsatz (10) koppelbar ist.

3. Höhenfühler nach Anspruch 2, **dadurch gekennzeichnet, dass** das Verbindungselement (38) eine Kette ist.

4. Höhenfühler nach einem der Ansprüche 1 bis 3, **dadurch gekennzeichnet, dass** der erste Arm (34) und der zweite Arm (36) gekrümmt sind und einen Radius definieren.

5. Höhenfühler nach einem der Ansprüche 1 bis 4, **dadurch gekennzeichnet, dass** die Feder eine Torsionsfeder (46) ist.

6. Höhenfühler nach einem der Ansprüche 1 bis 5, **dadurch gekennzeichnet, dass** die Feder an der Schwenklagerung des zweiten Arms (36) am ersten Arm (34) befestigt ist.

7. Höhenfühler nach einem der Ansprüche 1 bis 6, **dadurch gekennzeichnet, dass** der Schwenkbereich des zweiten Arms (36) relativ zum ersten Arm (34) durch mindestens einen Anschlag (50, 52) begrenzt ist.

8. Erntevorsatz (10), **gekennzeichnet durch** einen Höhenfühler nach einem der vorhergehenden Ansprüche.

9. Erntevorsatz (10) nach Anspruch 8, **dadurch gekennzeichnet, dass** ein Rahmen (12) des Erntevorsatzes (10) mit einer Unterseite ausgestattet ist, in der sich eine Ausnehmung befindet, in der der erste Arm (34) aufnehmbar ist.

10. Erntevorsatz (10) nach Anspruch 9, **dadurch gekennzeichnet, dass** sich die Ausnehmung in einem sich von vorn nach hinten erstreckenden Träger (20) an der Unterseite des Rahmens (12) befindet.

## Claims

1. A height sensor for a harvesting header (10), with a rotatable shaft (32) arranged transversely to a forward direction of movement of the harvesting header (10), a first, stiff arm (34) which is fixed to the shaft (32) and extends from the shaft (32) to the rear and down relative to the forward direction of movement, and a second stiff arm (36) which is pivotally coupled to the first arm (34) at a distance from the shaft (32) and extends to the rear and up from the rotatable connection to the first arm (34), **characterized in that** a spring biases the second arm (36) upwardly relative to the first arm (34).

2. A height sensor according to claim 1, **characterized in that** a connecting element (38) is connected to the second arm (36) at a point spaced from the pivotal mounting of the second arm (36) on the first arm (34) and can be coupled to the harvesting header (10).

3. A height sensor according to claim 2, **characterized in that** the connecting element (38) is a chain.

4. A height sensor according to any of claims 1 to 3, **characterized in that** the first arm (34) and the second arm (36) are curved and define a radius.

5. A height sensor according to any of claims 1 to 4, **characterized in that** the spring is a torsion spring (46).

6. A height sensor according to any of claims 1 to 5, **characterized in that** the spring is fixed on the pivotal mounting of the second arm (36) on the first arm (34).

7. A height sensor according to any of claims 1 to 6, **characterized in that** the pivoting range of the second arm (36) relative to the first arm (34) is limited by at least one stop (50, 52).

8. A harvesting header (10) **characterized by** a height sensor according to any of the preceding claims.

9. A harvesting header (10) according to claim 8, **characterized in that** a frame (12) of the harvesting header (10) is provided with an underside in which is located a recess, in which the first arm (34) can be received.

10. A harvesting header (10) according to claim 9, **characterized in that** the recess is located in a support (20) extending from front to rear on the underside of the frame (12).

## Revendications

1. Palpeur de hauteur pour tête de récolte (10) comprenant un arbre rotatif (32) perpendiculaire à un sens d'avancement vers l'avant de la tête de récolte (10), un premier bras rigide (34) raccordé de manière fixe à l'arbre (32) et se déployant à partir de l'arbre (32) vers l'arrière et vers le bas par rapport au sens d'avancement et un deuxième bras rigide (36) couplé de manière pivotante et à distance de l'arbre (32) au premier bras (34) et se déployant à partir de la liaison rotative avec le premier bras (34) vers l'arrière et vers le haut, **caractérisé en ce qu'**un ressort prétend le deuxième bras (36) vers le haut par rapport au premier bras (34).

2. Palpeur de hauteur conforme à la revendication 1, **caractérisé en ce qu'**un élément de fixation (38) est raccordé au deuxième bras (36) à distance du logement orientable du deuxième bras (36) sur le premier bras (34) et qu'il peut être couplé à la tête de récolte (10).

3. Palpeur de hauteur conforme à la revendication 2, **caractérisé en ce que** l'élément de fixation (38) est une chaîne.

4. Palpeur de hauteur conforme à l'une des revendications 1 à 3, **caractérisé en ce que** le premier bras (34) et le deuxième bras (36) sont courbés et définissent un certain rayon.

5. Palpeur de hauteur conforme à l'une des revendications 1 à 4, **caractérisé en ce que** le ressort est un ressort à torsion (46).

6. Palpeur de hauteur conforme à l'une des revendications 1 à 5, **caractérisé en ce que** le ressort est fixé au logement orientable du deuxième bras (36) sur le premier bras (34).

7. Palpeur de hauteur conforme à l'une des revendications 1 à 6, **caractérisé en ce que** la zone de pivotement du deuxième bras (36) par rapport au premier bras (34) est délimitée par au moins un arrêt (50, 52).

8. Tête de récolte (10) **caractérisée par** un palpeur de hauteur conforme à l'une des revendications précédentes.

9. Tête de récolte (10) conforme à la revendication 8, **caractérisée en ce que** le dessous d'un cadre (12) de la tête de récolte (10) comporte un creux pouvant contenir le premier bras (34).

10. Tête de récolte (10) conforme à la revendication 9, **caractérisée en ce que** le creux est pratiqué dans un porteur (20) s'étendant de l'avant à l'arrière au-dessous du cadre (12).
